# DEMANDE DE BREVET EUROPEEN

(11) **EP 4 821 728 A1**
(43) Date de publication de la demande: **14.10.2026**
(21) Numéro de dépôt: 26166199.5
(22) Date de dépôt: 19.03.2026
(51) Int. Cl.: B60K 11/02, B60H 1/32, B60K 1/00

(54) **SYSTEME DE BOITIER DE DEGAZAGE FIXE SUR UN PASSAGE DE ROUE D'UN COMPARTIMENT MOTEUR DE VEHICULE AUTOMOBILE**

(30) Priorité: 10.04.2025 FR 2503847
(71) Demandeur: Stellantis Auto SAS, 78300 Poissy (FR)
(72) Inventeur: CASTELLI, BRUNO, 92300 LEVALLOIS PERRET (FR); MARQUES, JEAN PIERRE, 91330 YERRES (FR)
(74) Mandataire: PSIP

(57) **Abrégé**

Système de boîtier de dégazage comportant un boîtier de dégazage (6), et un support (20) de fixation de ce boîtier (6) sur un passage de roue) d'un compartiment moteur d'un véhicule automobile, qui présente une fixation d'un équipement additionnel, ce support comportant une surface d'appui (32) de l'équipement additionnel, un logement plat (34) disposé parallèlement sous la surface d'appui (32) et ouvert d'un côté, et une fente (36) disposée au milieu du logement (34) en débouchant sur ce même côté, qui relie le logement plat (34) à la surface d'appui (32), le système de boîtier comportant une vis amovible (40) disposant d'une tête (42) qui se glisse dans le logement (34) et d'un corps s'ajustant dans la fente (36), pour serrer l'équipement additionnel sur la surface d'appui (32).

## Description

0001. La présente invention concerne un système de boîtier de dégazage comportant un boîtier de dégazage et un support modulaire de fixation de ce boîtier sur un passage de roue d'un compartiment moteur d'un véhicule automobile, pouvant recevoir un équipement additionnel, ainsi qu'un procédé d'assemblage de ce système de boîtier et un véhicule automobile équipé d'un tel système de boîtier.

0002. Les boîtiers de dégazage des véhicules automobiles équipés d'une machine électrique de traction, recevant le fluide de refroidissement, sont généralement disposés sur le côté du compartiment moteur et en hauteur pour récupérer les gaz du circuit, au-dessus d'un passage de roue avant et près du capot moteur, de manière à dégager l'espace central de ce compartiment occupé par le groupe motopropulseur.

0003. Les boîtiers de dégazage sont de cette manière disposés au point le plus haut du circuit pour recevoir en partie supérieure les gaz de ce circuit, et près du groupe motopropulseur afin de prévoir des tuyaux de raccordement avec ce groupe qui restent courts.

0004. Un type de support de boîte de dégazage connu fixé dans le compartiment moteur d'un véhicule automobile, présenté notamment par le document EP-A1-4357593, comporte une pièce en tôle découpée et pliée comprenant des perçages réalisés pour sa fixation par des vis sur le dessus du passage de roue.

0005. D'autres perçages du support reçoivent des plots formés en dessous du boîtier de dégazage pour le fixer sur ce support. Des vis fixées sur le support reçoivent des colliers de maintien de tuyaux de circulation du fluide de refroidissement passant à côté.

0006. Toutefois certaines gammes de véhicules électriques comporte des modèles recevant sur le passage de roue à côté du boîtier de dégazage alternativement deux types d'équipements différents, comprenant suivant le modèle de véhicule produit un dispositif de réchauffage du fluide de refroidissement, appelé « chiller » en langue anglaise, ou un système de pompe à chaleur, qui doivent être fixés au même endroit.

0007. Dans ce cas il est connu de prévoir un support en tôle capable de recevoir l'un ou l'autre de ces équipements, présentant des dispositifs de fixation, par exemple des formes particulières, des perçages ou des vis, permettant de fixer au choix l'un des deux équipements prévus.

0008. On peut alors obtenir des supports avec des dispositifs de fixation adaptés pour les deux équipements différents qui sont complexes, alors que suivant l'équipement installé une partie de ces dispositifs n'est pas utilisée. De plus les dispositifs de fixation prévus pour l'équipement qui n'est pas monté peuvent poser des problèmes, notamment en présentant un encombrement qui gêne pour le montage d'autres équipements.

0009. La présente invention a notamment pour but d'éviter ces problèmes de l'art antérieur.

0010. Elle propose à cet effet un système de boîtier de dégazage comportant un boîtier de dégazage, et un support de fixation de ce boîtier sur un passage de roue d'un compartiment moteur d'un véhicule automobile, ce support présentant une fixation d'un équipement additionnel comprenant une surface d'appui de l'équipement additionnel, ce système de support étant remarquable en ce que le support comporte un logement plat disposé parallèlement sous la surface d'appui et ouvert d'un côté, et une fente disposée au milieu du logement en débouchant sur ce même côté, qui relie le logement plat à la surface d'appui, et en ce que le système de boîtier comporte une vis amovible disposant d'une tête qui se glisse dans le logement et d'un corps s'ajustant dans la fente, pour serrer l'équipement additionnel sur la surface d'appui.

0011. Un avantage de ce système de boîtier de dégazage est qu'avec le logement du support relié à la surface d'appui par la fente, permettant d'insérer la tête de vis dans ce logement avec un blocage en rotation, et le corps dans la fente, on obtient une vis de serrage qui peut être facilement et rapidement ajouté sur le support dans le cas où l'équipement additionnel est utilisé, pour le serrer sur la surface d'appui.

0012. Dans le cas où l'équipement additionnel n'est pas monté on obtient alors un espace libre au-dessus de la surface d'appui qui n'est pas encombré par la vis amovible, restant disponible pour monter par exemple un autre équipement qui est fixé sur le passage de roue par d'autres moyens.

0013. On obtient de manière économique un support modulaire permettant de recevoir l'équipement additionnel, ou de laisser un espace libre en l'absence de cet équipement.

0014. Le système de boîtier de dégazage selon l'invention peut comporter de plus une ou plusieurs des caractéristiques suivantes, qui peuvent être combinées entre elles.

0015. En particulier, le support peut présenter une forme comportant deux barres reliées entre elles en formant un angle.

0016. Dans ce cas, avantageusement la surface d'appui est disposée au niveau de l'angle perpendiculairement à une première barre.

0017. De plus, avantageusement le logement plat est ouvert d'un côté qui est opposé à la deuxième barre.

0018. En particulier, les barres peuvent présenter une section circulaire.

0019. Avantageusement, le support comporte pour sa fixation sur le passage de roue un pion cylindrique dépassant d'une extrémité.

0020. L'invention a aussi pour objet un procédé d'assemblage d'un système de boîtier comprenant l'une quelconque des caractéristiques précédentes, remarquable en ce que pour le montage sur un type de véhicule comprenant l'équipement additionnel, il comporte une étape d'insertion de la tête de la vis amovible dans le logement plat avec une pression assurant un serrage de cette vis.

0021. L'invention a de plus pour objet un véhicule automobile équipé d'un système de boîtier de dégazage comprenant l'une quelconque des caractéristiques précédentes, remarquable en ce qu'il comporte une motorisation électrique.

0022. Avantageusement, le véhicule comporte un isolant souple couvrant le passage de roue, qui est fixé en même temps par une extrémité du support comprenant un pion traversant l'isolant et le passage de roue.

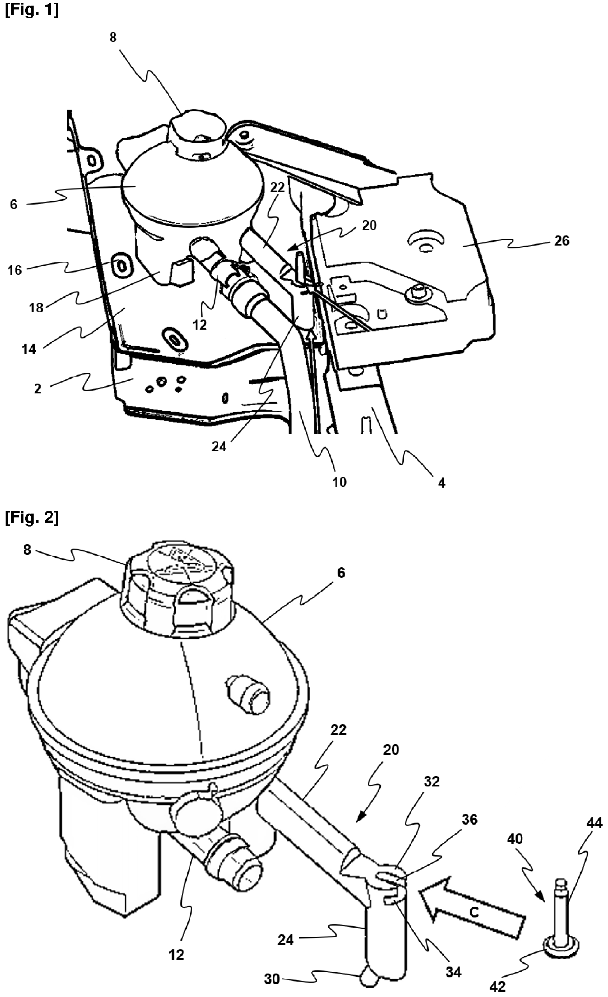

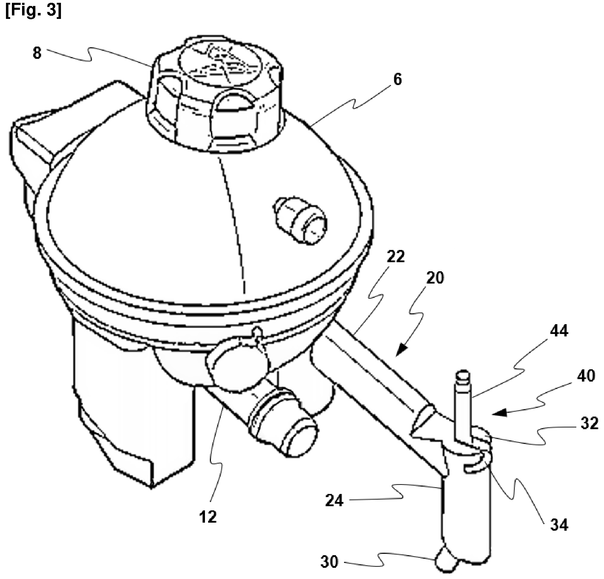

0023. L'invention sera mieux comprise et d'autres caractéristiques et avantages apparaîtront plus clairement à la lecture de la description ci-après donnée à titre d'exemple, en référence aux dessins annexés dans lesquels :
0024. [Fig. 1] présente une vue de dessus d'un système de boîtier de dégazage selon l'invention préparé pour recevoir l'équipement additionnel ;
0025. [Fig. 2] est une vue de détail du boîtier de dégazage avec son support seul recevant la vis amovible de fixation de l'équipement additionnel ; et
0026. [Fig. 3] est une vue de détail du boîtier de dégazage avec la vis amovible installée.

0027. Dans l'ensemble du document la direction supérieure ou dessus est relative à un véhicule posé sur un sol horizontal.

0028. La figure 1 présente un compartiment moteur avant d'un véhicule électrique comportant un passage de roue 2 fixé au-dessus d'une roue avant, sur le côté d'un longeron 4 bordant ce compartiment.

0029. Un panneau isolant souple 14 couvrant le passage de roue 2, est fixée sur ce passage par une succession de plots de fixation 16 répartis autour de ce boîtier.

0030. Un boîtier de dégazage 6 sensiblement sphérique, comportant sur le dessus un bouchon de remplissage 8, reçoit à sa base une canalisation de fluide de refroidissement 10 arrivant par une entrée inférieure 12.

0031. Le boîtier de dégazage 6 présente vers l'extérieur du véhicule une fixation inférieure 18 se fixant sur le passage de roue 2.

0032. Un support latéral 20 réalisé par un moulage d'une matière plastique, comporte une barre droite sensiblement horizontale 22 tournée vers l'intérieur du véhicule, partant du dessous du boîtier, puis après un angle une barre droite verticale 24 qui descend sur le dessus de l'isolant 14 près du longeron 4. Les barres 22, 24 formant le support 20 présentent une section circulaire.

0033. Un plateau de réception d'équipements complémentaires 26 fixé sur le dessus du longeron 4, s'étend vers l'intérieur du véhicule dans le compartiment moteur.

0034. Le plateau de réception d'équipements 26 permet de recevoir contre le passage de roue 2, suivant le modèle réalisé au sein d'une gamme de véhicules, une pompe à chaleur présentant un volume important ou un dispositif de réchauffage du fluide de refroidissement présentant un volume plus petit.

0035. La figure 2 présente le support latéral 20 comportant un plot cylindrique 30 dépassant en dessous de sa barre verticale 24, qui est introduit dans un perçage de l'isolant 18 et de la tôle du passage de roue 2 afin de former à la fois un maintien du boîtier de dégazage 6 éloigné de ce boîtier pour lui assurer une stabilité, et une fixation de l'isolant 14 sur ce passage de roue qui complète la série de plots de fixation 16.

0036. La barre verticale 24 se termine sur le dessus par un plan d'appui 32 perpendiculaire et sensiblement horizontal, comportant en dessous un logement plat 34 parallèle à ce plan, qui est ouvert vers l'intérieur du véhicule dans la direction opposée à la barre horizontale 22.

0037. Une fente 36 disposée suivant l'axe de la barre verticale 24, relie le logement plat 34 à la surface d'appui 32.

0038. Une vis de serrage 40 comporte une tête 42 qui s'ajuste dans le logement plat 34 et une tige filetée 44 qui s'ajuste dans la fente 36 par un coulissement horizontal amenant cette tête au fond de son logement.

0039. Lors du coulissement C de la vis 40 sa tête 42 est serrée dans le logement 34 afin d'assurer un maintien de la vis qui reste fixée à l'intérieur par serrage, et un blocage en rotation de cette tête.

0040. La figure 3 présente la vis 40 maintenue en position sur le support 20, sa tige filetée 44 étant dressée dans le prolongement de la barre verticale 24, au centre de cette barre.

0041. On obtient un support 20 maintenant le boîtier de dégazage 6 tout en fixant en même temps l'isolant 14 sur le passage de roue 2, qui présente une modularité permettant pour un premier type de véhicule de l'utiliser sans la vis de serrage 40 si l'équipement additionnel particulier n'est pas fixé sur la surface d'appui 32. Dans ce cas le volume au-dessus de la surface d'appui 32 sans la vis 40 est disponible pour y installer d'autres types d'équipements.

0042. Après une adaptation rapide du support 20 comprenant l'insertion de la vis 40 dans son logement 34, qui peut se faire par une simple pression manuelle et sans outillage, on obtient un usage complémentaire du support 20 qui reçoit l'équipement additionnel directement fixé par cette vis sur la surface d'appui 32.

## Revendications

1. Système de boîtier de dégazage comportant un boîtier de dégazage (6), et un support (20) de fixation de ce boîtier (6) sur un passage de roue (2) d'un compartiment moteur d'un véhicule automobile, ce support (20) présentant une fixation d'un équipement additionnel comprenant une surface d'appui (32) de l'équipement additionnel, **caractérisé en ce que** le support (20) comporte un logement plat (34) disposé parallèlement sous la surface d'appui (32) et ouvert d'un côté, et une fente (36) disposée au milieu du logement (34) en débouchant sur ce même côté, qui relie le logement plat (34) à la surface d'appui (32), et **en ce que** le système de boîtier comporte une vis amovible (40) disposant d'une tête (42) qui se glisse dans le logement (34) et d'un corps s'ajustant dans la fente (36), pour serrer l'équipement additionnel sur la surface d'appui (32).

2. Système de boîtier selon la revendication 1, **caractérisé en ce que** le support (20) présente une forme comportant deux barres (22, 24) reliées entre elles en formant un angle.

3. Système de boîtier selon la revendication 2, **caractérisé en ce que** la surface d'appui (32) est disposée au niveau de l'angle perpendiculairement à une première barre (24).

4. Système de boîtier selon la revendication 3, **caractérisé en ce que** le logement plat (34) est ouvert d'un côté qui est opposé à la deuxième barre (22).

5. Système de boîtier selon l'une quelconque des revendications 2 à 4, **caractérisé en ce que** les barres (22, 24) présentent une section circulaire.

6. Système de boîtier selon l'une quelconque des revendications précédentes, **caractérisé en ce que** le support (20) comporte pour sa fixation sur le passage de roue (2) un pion cylindrique (30) dépassant d'une extrémité.

7. Procédé d'assemblage d'un système de boîtier selon l'une quelconque des revendications précédentes, **caractérisé en ce que** pour le montage sur un type de véhicule comprenant l'équipement additionnel, il comporte une étape d'insertion de la tête (42) de la vis amovible (40) dans le logement plat (34) avec une pression assurant un serrage de cette vis (40).

8. Véhicule automobile équipé d'un système de boîtier de dégazage selon l'une quelconque des revendications 1 à 6, **caractérisé en ce qu'**il comporte une motorisation électrique.

9. Véhicule automobile selon la revendication 8, **caractérisé en ce qu'**il comporte un isolant souple (14) couvrant le passage de roue (2), qui est fixé en même temps par une extrémité du support (20) comprenant un pion (30) traversant l'isolant (14) et le passage de roue (2).
